# EUROPEAN PATENT SPECIFICATION

(11) **EP 3 392 008 B1**
(45) Date of publication and mention of the grant of the patent: **10.11.2021**
(21) Application number: 18166135.6
(22) Date of filing: 06.04.2018
(51) Int. Cl.: B27C 9/04, B27M 1/08, B23Q 3/155

(54) **MACHINE TOOL**
WERKZEUGMASCHINE
MACHINE OUTIL

(30) Priority: 21.04.2017 IT 201700044014
(43) Date of publication of application: 24.10.2018
(73) Proprietor: SCM Group S.p.A., 47921 Rimini (RN) (IT)
(72) Inventor: MORELLI, Fabrizio, 47921 RIMINI (IT)
(74) Representative: Santi, Filippo

(56) References cited:
- EP-A1- 2 842 705
- EP-A1- 3 017 922
- EP-A1- 3 106 275
- CH-B1- 706 794
- DE-A1- 4 301 217
- DE-A1- 10 021 684

## Description

This invention relates to a machine tool for machining panels according to the preamble of claim 1. Such a machine tool is known from the document EP3106275A1.

More in detail, the invention relates to a machine tool for machining panels, for example wooden panels.

Even more in detail, the machine according to the invention is able to perform a multitude of machining operations on each panel using a series of tools located on the machine.

The machine tool in question is in fact designed to carry out, on the workpieces to be machined, various types of drilling and/or milling, as well as other types of machining operations rendered possible by the particular functionalities of the machine and the multitude of tools with which it is provided.

A wide variety of types of multi-functional machine tools are known which, in order to allow the execution of various machining operations on the workpieces, are equipped with a series of tools of various types, such as, for example, cutters or drilling bits.

In order to allow the changing of the tools, these machines are normally provided with units or devices for housing the tools, and movement systems to allow each operating head present on the machine to pick and reposition the various tools with which it is provided.

However, the above-mentioned prior art machine tools have various technical limitations and drawbacks linked, mainly, to the positioning of the relative units for housing the machining tools.

In light of the above, the aim of this invention is therefore to provide a machine tool which allows various machining operations to be performed on the workpieces to be machined, without any constraint for the movements of the relative working parts.

Another aim of the invention is to provide a machine tool which allows a multitude of machining operations to be performed with very fast execution times.

A further aim of this invention is to provide a machine tool which allows several parts to be quickly machined simultaneously.

This invention therefore relates specifically to a machine tool for machining panels comprising: an operating station comprising at least one operating member, which is movable and configured for receiving at least one tool for performing a machining operation on at least one panel; transporting means for transporting at least one panel according to a predetermined advancing direction from a loading area to said operating station; and a system for changing a tool, comprising a housing member for housing a plurality of tools designed for use with said at least one operating member, said housing member being movable in translation along a predetermined axis passing said operating station and substantially parallel to said predetermined advancing direction, in such a way that when said housing member is positioned in a zone which is located at said operating station, said at least one operating member can reach said housing member for picking up a tool.

Further, according to the invention, said at least one operating member can be mobile according to a pair of substantially orthogonal directions.

Preferably, according to the invention, said predetermined axis is substantially orthogonal to each of said directions.

Advantageously, according to the invention, said predetermined axis can pass through a peripheral zone of the operating station.

Again according to the invention, said system for changing a tool can comprise an oblong support parallel to said predetermined axis, said oblong support being able to comprise at least one guide element for guiding the movement of said housing member along said predetermined axis.

Further according to the invention, said transporting means can comprise a least one holding member for holding, in use, at least one peripheral region of a panel, said at least one holding member being slidably associated with an oblong support orientated parallel to said predetermined axis.

Preferably according to this invention, said at least one operating member comprises an upper operating member and a lower operating member which are placed opposites to each other with respect to a transit level for at least one panel in said operating station, in such a way that the upper operating member can operate from the upside on at least one panel and said lower operating member can operate from the downside on at least one panel.

Further according to the invention, said operating station can comprise a support system configured for providing a support, from the downside, to at least one panel, at least one opening being formed in said support system to allow said lower operating member to operate from the downside on at least one panel.

Again according to the invention, said housing member can comprise an upper rack and a lower rack for housing, respectively, at least one upper tool which can be picked up from said upper operating member and at least one lower tool which can be picked up from said lower operating member.

The invention is now described, by way of example and without limiting the scope of the invention, with reference to the accompanying drawings which illustrate preferred embodiments of it, in which:

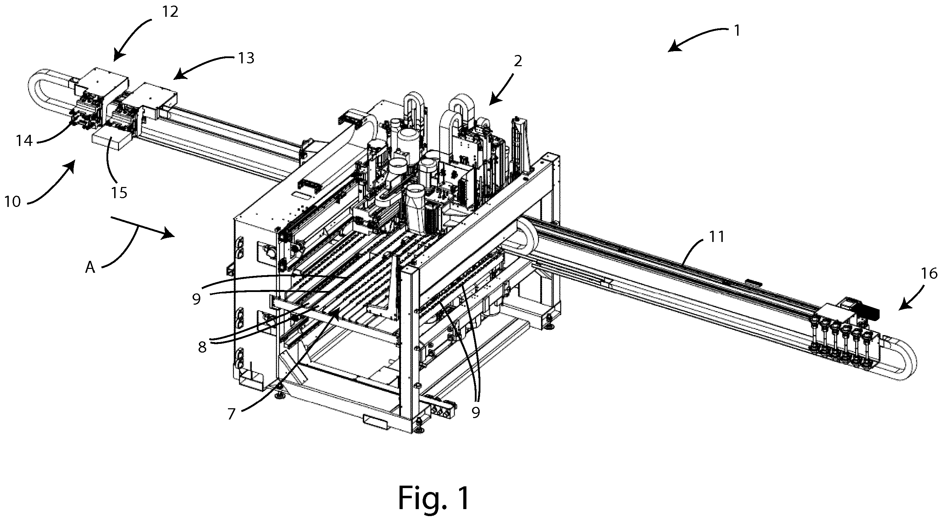

Figure 1 is a first perspective view of a machine tool according to the invention;

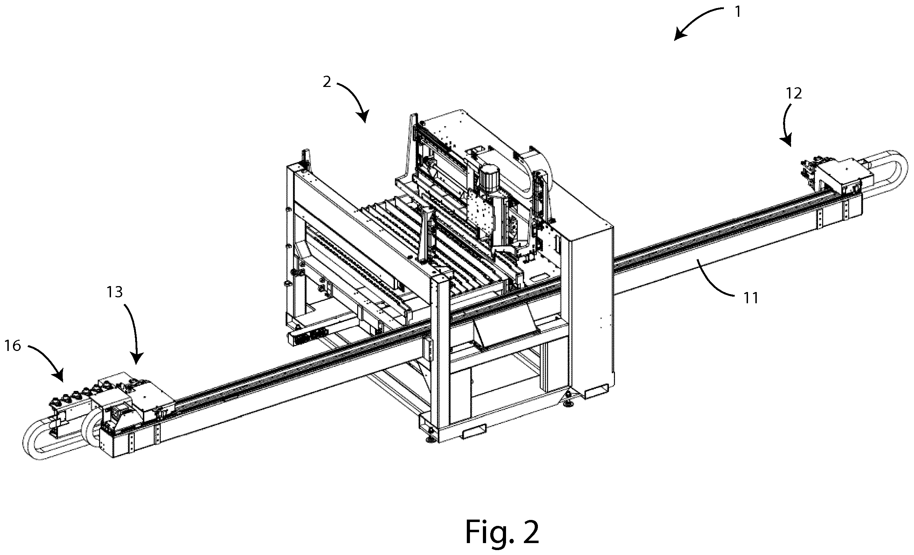

Figure 2 is a second perspective view of the machine tool shown in Figure 1;

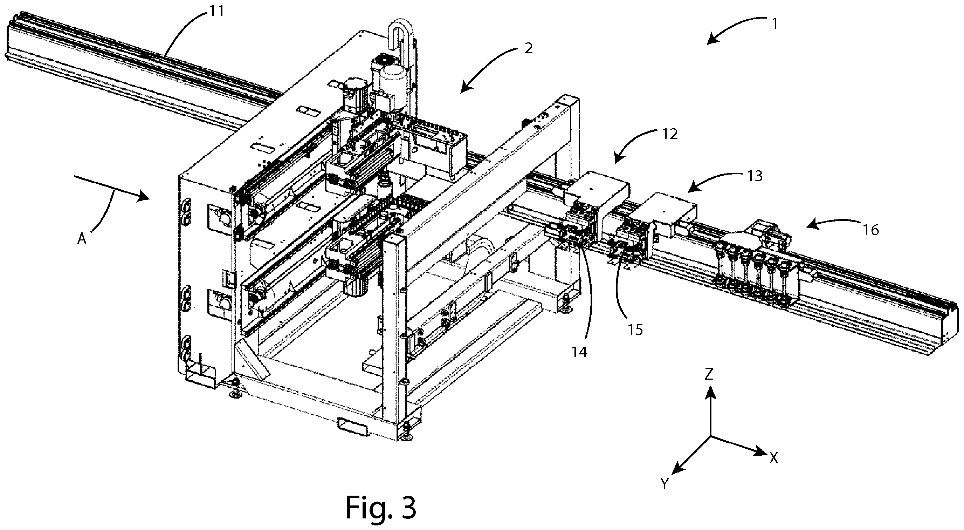

Figure 3 is a partial view of the machine tool shown in Figures 1 and 2, in which some components of the machine tool are hidden for a clearer representation; and

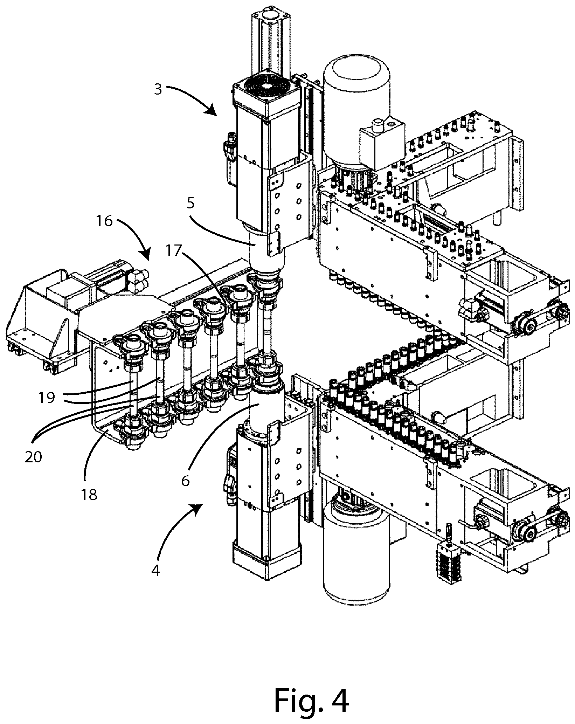

Figure 4 is a detailed view of some components of the machine tool of Figures 1, 2 and 3.

In the various figures similar parts are labelled with the same reference numerals.

With reference to the accompanying drawings, the numeral 1 denotes in its entirety a machine tool for machining panels, for example wooden panels.

The machine tool 1 comprises an operating station 2 comprising an upper operating member 3 and a lower operating member 4, on which are respectively mounted an upper electric spindle 5 and a lower electric spindle 6 designed to receive a tool or a support for a tool.

Each of said operating members 3, 4 is provided with various movement possibilities, including also the translation along a first direction Y by means of respective linear guides, and also along a second direction Z substantially orthogonal to said first direction Y.

The machine tool 1 also comprises a support system 7 formed by a plurality of bars 8 oriented parallel to the first direction Y and positioned at a predetermined distance from each other.

The top part of each bar 8 is equipped with a plurality of idle rollers 9 to allow the resting of the panels to be machined and favour their feeding along an advancing direction A.

The machine tool 1 is also equipped with transporting means 10 for transporting one or more panels, if necessary even several panels placed over each other, towards the operating station 2 according to the above-mentioned advancing direction A.

The machine tool 1 comprises according to the invention an elongated support 11 substantially rectilinear and also positioned parallel to the advancing direction A.

According to the invention, the elongated support 11 passes through a lateral zone of the operating station 2 and is positioned adjacent to corresponding ends of the bars 8, in such a way that an empty space is formed between the latter and said elongated support 11 for its entire longitudinal extension.

A first holding member 12 and a second holding member 13, respectively equipped with a first clamp 14 and a second clamp 15, configured according to the invention, for holding respective peripheral portions of the panels to be machined, are enabled to slide, in the above-mentioned empty space, on the elongated support 11, thanks to special movement means.

A carriage, that is, a housing member 16, for housing machine tools, such as, for example, drilling bits or cutters, slides also according to the invention along a predetermined axis X on the elongated support 11.

In particular, the housing member 16 moves, thanks to special guide elements, to the above-mentioned empty space.

The predetermined axis X is parallel to the advancing direction A and preferably orthogonal to each of the above-mentioned directions Y, Z.

However, according to further embodiments of the invention not shown in the drawings, the predetermined axis X may be inclined relative to each of the above-mentioned direction Y, Z.

A dedicated movement system may be provided for the carriage 16, to allow the carriage 16 to move independently from the above-mentioned holding members 12, 13.

Alternatively, it is possible to provide a connection between the housing member 16 and at least one of the holding members 12, 13, so as to be able to pull the latter.

More specifically, the carriage 16 comprises an upper rack 17 and a lower rack 18 configured for receiving, respectively, a first plurality of tools 19 and a second plurality of tools 20, if necessary already provided with the necessary tool holders.

The first plurality of tools 19 and the second plurality of tools 20 can comprise, for example, drilling bits or cutters.

During the operation of the machine tool 1, the panels to be machined are picked up from the loading area of the machine by the first clam 14 and second clamp 15 and carried to the operating station 2 for being subjected to the machining operations planned by the selected work programme.

At the start of each work cycle, the operating members 3, 4 pick up from the housing member 16 the tools necessary for the execution of the planned machining.

For the picking up of the tools by the operating members 3, 4, the carriage 16 is moved to an area adjacent to the operating station 2 for allowing the above-mentioned operating members 3, 4 to approach the carriage 16 and pick up the tools requested for the machining operations.

In detail, to allow the picking up of the tools, the upper operating member 3 moves firstly above the carriage 16 and then lowers parallel to the second direction Z until achieving the coupling between the upper electric spindle 5 and the underlying tool.

In order to perform the same operation, the lower operating member 4 moves, on the other hand, beneath the carriage 16 to the tool to be picked up and then rises parallel to the second direction Z until achieving, also in this case, the mutual coupling between the lower electric spindle 6 and the tool.

The machining operations using the machine tool 1 can be performed, by the operating members 3, 4, with the panel stationary or moving along the advancing direction A.

The operating members 3, 4 can also simultaneously machine on the two opposite faces of the same panel, or on two different panels, superposed on each other.

In detail, the tool mounted in the lower operating member 4, when in operation, operates on the lower face of the panel passing through the empty space between two consecutive bars 8.

According to an alternative embodiment of this invention, the machine tool 1 can comprise a single operating member rather than two operating members facing each other as described above.

The machine tool according to the invention therefore allows the operations for picking up and changing the tools to be performed quickly and efficiently.

Thanks in fact to the particular construction architecture of the machine tool described above, the movements which each operating member is required to perform to pick and reposition the tools are simple and do not last long.

## Claims

1. Machine tool (1) for machining panels, which comprises:
an operating station (2) comprising at least one operating member (3, 4), which is movable and configured to receive at least one tool for performing an operation on at least one panel;
transporting means (10) for transporting at least one panel according to a predetermined advancing direction (A) from a loading area to said operating station (2), where said transporting means (10) comprise at least one holding member (12, 13) for taking, when in use, at least one peripheral region of a panel, said at least one holding member (12, 13) being slidably associated to an elongated support (11) oriented parallelly to said predetermined axis (X) and passing through a lateral zone of the operating station (2); and
a tool substitution system comprising a housing member (16) for housing a plurality of tools (20) suitable for the use with said at least one operating member (3, 4), said housing member (16) being movable in translation according to said predetermined axis (X) which passes at said operating station (2) and is substantially parallel to said predetermined advancing direction (A), where said tool substitution system comprises said elongated support (11) which is directed parallelly to said predetermined axis (X), said elongated support (11) comprising at least one guide element for guiding the movement of said housing member (16) along said predetermined axis (X), such that said at least one operating member (3, 4) is able to reach said housing member (16) to take a tool (20) when said housing member (16) is in a zone which is placed at said operating station (2).

2. Machine tool (1) according to claim 1, **characterized in that** said at least one operating member (3, 4) is movable according to a pair of directions (Y, Z) which are substantially orthogonal.

3. Machine tool (1) according to claim 2, **characterized in that** said predetermined axis (X) is substantially orthogonal to each of said directions (Y, Z).

4. Machine tool (1) according to any one of the preceding claims, **characterized in that** said predetermined axis (X) passes at a peripheral area of said operating station (2).

5. Machine tool (1) according to any one of the preceding claims, **characterized in that** said at least one operating member comprises an upper operating member (3) and a lower operating member (4) which are placed opposite to each other with respect to a transit level for at least one panel in said operating station (2), such that said upper operating member (3) is able to operate from upside in at least one panel and said lower operating member (4) is able to operate from downside in at least one panel.

6. Machine tool (1) according to claim 5, **characterized in that** said operating station (2) comprises a support system configured to provide at least one panel with a support from downside, at least one opening being formed in said support system to enable said lower operating member (4) to operate from downside on at least one panel.

7. Machine tool (1) according to claim 5 or 6, **characterized in that** said housing member (16) comprises an upper rack (17) and a lower rack (18) to respectively house at least one upper tool, which said upper operating member (3) is able to take, and at least one lower tool, which said lower operating member (4) is able to take.

## Patentansprüche

1. Werkzeugmaschine (1) zur Bearbeitung von Platten, umfassend:
eine Arbeitsstation (2), zumindest ein Arbeitsorgan (3, 4) umfassend, das beweglich und dafür ausgelegt ist, zumindest ein Werkzeug zur Ausführung einer Bearbeitung an zumindest einer Platte aufzunehmen;
Transportmittel (10) zum Befördern zumindest einer Platte entlang einer vorbestimmten Vorschubrichtung (A) von einem Ladebereich zu der Arbeitsstation (2), wobei die Transportmittel (10) zumindest ein Halteorgan (12, 13) umfassen, um, im Gebrauch, zumindest einen peripheren Bereich einer Platte zu greifen, wobei das zumindest eine Halteorgan (12, 13) gleitbar mit einem länglichen Träger (11) verbunden ist, der parallel zu einer vorbestimmten Achse (X) ausgerichtet ist und durch einen seitlichen Bereich der Arbeitsstation (2) führt; und
ein Werkzeugwechselsystem, umfassend ein Aufnahmeorgan (16) zur Aufnahme einer Vielzahl von Werkzeugen (20), die zur Verwendung mit dem zumindest einen Arbeitsorgan (3, 4) geeignet sind, wobei das Aufnahmeorgan (16) eine Translationsbewegung entlang der vorbestimmten Achse (X) ausführen kann, die durch die Arbeitsstation (2) führt und im Wesentlichen parallel zu der vorbestimmten Vorschubrichtung (A) ist, wobei das Werkzeugwechselsystem den länglichen Träger (11) umfasst, der parallel zu der vorbestimmten Achse (X) ausgerichtet ist, wobei der längliche Träger (11) zumindest ein Führungselement zum Führen der Bewegung des Aufnahmeorgans (16) entlang der vorbestimmten Achse (X) umfasst, so dass das zumindest eine Arbeitsorgan (3, 4) in der Lage ist, das Aufnahmeorgan (16) zu erreichen, um ein Werkzeug (20) daraus zu entnehmen, wenn das Aufnahmeorgan (16) in einer Zone angeordnet ist, die sich in der Arbeitsstation (2) befindet.

2. Werkzeugmaschine (1) nach Anspruch 1, **dadurch gekennzeichnet, dass** das zumindest eine Arbeitsorgan (3, 4) in einem Paar von Richtungen (Y, Z) beweglich ist, die im Wesentlichen orthogonal zueinander sind.

3. Werkzeugmaschine (1) nach Anspruch 2, **dadurch gekennzeichnet, dass** die vorbestimmte Achse (X) im Wesentlichen orthogonal zu jeder der Richtungen (Y, Z) ist.

4. Werkzeugmaschine (1) nach einem der vorhergehenden Ansprüche, **dadurch gekennzeichnet, dass** die vorbestimmte Achse (X) durch eine periphere Zone der Arbeitsstation (2) führt.

5. Werkzeugmaschine (1) nach einem der vorhergehenden Ansprüche, **dadurch gekennzeichnet, dass** das zumindest eine Arbeitsorgan ein oberes Arbeitsorgan (3) und ein unteres Arbeitsorgan (4) umfasst, die einander gegenüber in Bezug auf eine Durchlaufebene für zumindest eine Platte in der Arbeitsstation (2) angeordnet sind, so dass das obere Arbeitsorgan (3) die zumindest eine Platte von oben bearbeiten kann und das untere Arbeitsorgan (4) die zumindest eine Platte von unten bearbeiten kann.

6. Werkzeugmaschine (1) nach Anspruch 5, **dadurch gekennzeichnet, dass** die Arbeitsstation (2) ein Auflagesystem umfasst, das dafür ausgelegt ist, zumindest eine Platte von unten abzustützen, wobei in dem Auflagesystem zumindest eine Öffnung ausgebildet ist, um dem unteren Arbeitsorgan (4) die Bearbeitung von zumindest einer Platte von unten zu ermöglichen.

7. Werkzeugmaschine (1) nach Anspruch 5 oder 6, **dadurch gekennzeichnet, dass** das Aufnahmeorgan (16) ein oberes Gestell (17) und ein unteres Gestell (18) umfasst, um jeweils zumindest ein oberes Werkzeug aufzunehmen, das vom oberen Arbeitsorgan (3) entnommen werden kann, beziehungsweise zumindest ein unteres Werkzeug aufzunehmen, das vom unteren Arbeitsorgan (4) entnommen werden kann.

## Revendications

1. Machine-outil (1) pour l'usinage de panneaux, qui comprend :
une station opérationnelle (2) comprenant au moins un organe opérationnel (3, 4), qui est mobile et configuré pour recevoir au moins un outil pour exécuter une opération sur au moins un panneau ;
des moyens de transport (10) pour transporter au moins un panneau selon une direction d'avance prédéfinie (A) depuis une zone de chargement jusqu'à ladite station opérationnelle (2), où lesdits moyens de transport (10) comprennent au moins un organe de maintien (12, 13) pour tenir, lors de l'utilisation, au moins une région périphérique d'un panneau, ledit au moins un organe de maintien (12, 13) étant associé de façon coulissante à un support allongé (11) orienté parallèlement audit axe prédéfini (X) et passant à travers une zone latérale de la station opérationnelle (2) ; et
un système de changement d'outil comprenant un organe de logement (16) pour loger une pluralité d'outils (20) destinés à être utilisés avec ledit au moins un organe opérationnel (3, 4), ledit organe de logement (16) étant mobile en translation selon ledit axe prédéfini (X) qui passe au niveau de ladite station opérationnelle (2) et est essentiellement parallèle à ladite direction d'avance prédéfinie (A), où ledit système de changement d'outil comprend ledit support allongé (11) qui est orienté parallèlement audit axe prédéfini (X), ledit support allongé (11) comprenant au moins un élément de guidage pour guider le déplacement dudit organe de logement (16) le long dudit axe prédéfini (X), de manière à ce que ledit au moins un organe opérationnel (3, 4) puisse atteindre ledit organe de logement (16) pour prendre un outil (20) lorsque ledit organe de logement (16) est dans une zone qui est située au niveau de ladite station opérationnelle (2).

2. Machine-outil (1) selon la revendication 1, **caractérisée en ce que** ledit au moins un organe opérationnel (3, 4) est mobile selon une paire de directions (Y, Z) qui sont essentiellement orthogonales.

3. Machine-outil (1) selon la revendication 2, **caractérisée en ce que** ledit axe prédéfini (X) est essentiellement orthogonal à chacune desdites directions (Y, Z).

4. Machine-outil (1) selon l'une quelconque des revendications précédentes, **caractérisée en ce que** ledit axe prédéfini (X) passe au niveau d'une zone périphérique de ladite station opérationnelle (2).

5. Machine-outil (1) selon l'une quelconque des revendications précédentes, **caractérisée en ce que** ledit au moins un organe opérationnel comprend un organe opérationnel supérieur (3) et un organe opérationnel inférieur (4) qui sont disposés l'un à l'opposé de l'autre par rapport à un niveau de passage pour au moins un panneau dans ladite station opérationnelle (2), de manière à ce que ledit organe opérationnel supérieur (3) puisse opérer par le haut dans au moins un panneau et ledit organe opérationnel inférieur (4) puisse opérer par le bas dans au moins un panneau.

6. Machine-outil (1) selon la revendication 5, **caractérisée en ce que** ladite station opérationnelle (2) comprend un système de support configuré pour fournir à au moins un panneau un support par le bas, au moins une ouverture étant formée dans ledit système de support pour permettre audit organe opérationnel inférieur (4) d'opérer par le bas sur au moins un panneau.

7. Machine-outil (1) selon la revendication 5 ou 6, **caractérisée en ce que** ledit organe de logement (16) comprend un râtelier supérieur (17) et un râtelier inférieur (18) pour loger respectivement au moins un outil supérieur, que ledit organe opérationnel supérieur (3) peut prendre, et au moins un outil inférieur, que ledit organe opérationnel inférieur (4) peut prendre.
